# EUROPEAN PATENT APPLICATION

(11) **EP 2 050 866 A2**
(43) Date of publication of application: **22.04.2009**
(21) Application number: 08016950.1
(22) Date of filing: 26.09.2008
(51) Int. Cl.: D06P 1/00, C08J 7/06

(54) **Method of tinting a plastic article**

(30) Priority: 09.10.2007 US 973431
(71) Applicant: Bayer MaterialScience LLC, Pittsburgh, PA 15205 (US)
(72) Inventor: Pyles, Robert Allen, Bethel Park PA 15102-2306 (US); Archey, Rick L., Pleasant Hills PA 15236-4334 (US)
(74) Representative: Klimiuk, Meike

(57) **Abstract**

A method of tinting a plastic article is provided. The method comprises the steps of (a) providing a plastic article comprising a thermoset or thermoplastic polymer; (b) contacting at least a portion of the surface of said plastic article with a treatment composition comprising at least one dye and water; (c) maintaining said portion of said plastic article in contact with said treatment composition for a period of time at least sufficient to form a tinted plastic article; (d) removing said tinted plastic article from contact with said treatment composition; and (e) rinsing said tinted plastic article with water to remove excess dye. The method is carried out in the absence of an organic solvent, without the need for fixing or further processing steps.

## Description

### FIELD OF THE INVENTION

The present invention relates to a method of tinting a plastic article without the use of organic solvents. A plastic article such as a molded article of thermoplastic polyurethane or polycarbonate is contacted with a treatment composition which includes one or more dyes and water.

### BACKGROUND OF THE INVENTION

Colored plastic articles can be prepared by means of incorporating (e.g., by means of compounding) pigments and/or dyes directly into the polymeric materials from which the articles are prepared. Such direct incorporation methods result in the colorant being dispersed substantially throughout the molded article. Direct incorporation methods are not particularly well suited for the preparation of molded articles that are only slightly colored or tinted (e.g., less than opaque), such as in the case of sunshade lenses. It is typically difficult to adequately and sufficiently disperse the small amounts of colorant required to prepare slightly colored or tinted plastic articles, by means of direct incorporation methods.

While master-batches of dye and resin can be used to better control the amount of dye incorporated during compounding and/or extrusion processes, the preparation of the master-batch requires additional steps. In addition, the resin of the master-batch will be exposed to at least two heat cycles (one during the preparation of the master-batch, and another during preparation of the dyed molded article), which can result in a final molded article having degraded physical properties, and, due to thermal yellowing, a color different from the one intended.

In light of environmental concerns related to the use of organic solvents, more recently there has been increased emphasis towards the development of dyeing methods that make use of aqueous dye compositions. Additionally, the use of organic solvents can cause odor problems in the end product, necessitating an additional processing step of baking to remove the solvent.

It would be desirable to develop new methods of dyeing plastic articles that make use of aqueous dye compositions that provide adequate coloration while minimizing or eliminating any organic solvents or components thereof.

### SUMMARY OF THE INVENTION

In accordance with the present invention, there is provided a method of tinting a plastic article comprising:
(a) providing a plastic article comprising a thermoset or thermoplastic polymer, with the proviso that the plastic article does not comprise a polymer prepared from diethyleneglycol bis allylcarbonate,
(b) contacting at least a portion of the surface of said plastic article with a treatment composition comprising at least one dye and water,
(c) maintaining said portion of said plastic article in contact with said treatment composition for a period of time at least sufficient to form a tinted plastic article;
(d) removing said tinted plastic article from contact with said treatment composition; and
(e) rinsing said tinted plastic article with water to remove excess dye,
   wherein the treatment composition is characterized by the absence of organic solvent. An advantage of the present invention is that it can be carried out without the need for fixing or further processing steps.
   In an additional aspect the invention further involves a dye separation process after the dye operation is completed, the separation process including the further steps of:
(i) contacting the treatment composition with particulate activated carbon to form a mixture of the treatment; composition and particulate activated carbon;
(ii) isolating a dye-free liquid comprising water from the mixture; and
(iii) adding at least one dye to the dye-free liquid, thereby forming a further treatment composition. This further processing is useful when recycling of the treatment composition is desired, such as for environmental reasons. It is also possible to dispose of the treated water, for example by sending the water to the drain for treatment in a water treatment facility.

### DETAILED DESCRIPTION OF THE INVENTION

Other than in the operating examples, or where otherwise indicated, all numbers expressing quantities of ingredients, reaction conditions, and so forth used in the specification and claims are to be understood as modified in all instances by the term "about." All ranges include any sub-range subsumed therein.

In one aspect, the present invention provides a method of tinting a plastic article comprising the steps of:
(a) providing a plastic article comprising a thermoset or thermoplastic polymer, with the proviso that the plastic article does not comprise a polymer prepared from diethyleneglycol bis allylcarbonate,
(b) contacting at least a portion of the surface of said plastic article with a treatment composition comprising at least one dye and water,
(c) maintaining said portion of said plastic article in contact with said treatment composition for a period of time at least sufficient to form a tinted plastic article;
(d) removing said tinted plastic article from contact with said treatment composition; and
(e) rinsing said tinted plastic article with water to remove excess dye,
wherein the treatment composition is characterized by the absence of organic solvent.

As used herein, the term "organic solvent" refers to any substance containing carbon, hydrogen and optionally, oxygen and is normally a liquid at 25C or is easily converted to a liquid by elevating the temperature up to 100C. In addition, the term organic solvent further refers to a combination of two or more of these substances mixed together.

As used herein, the term "fixing" refers to process steps or the addition of compounds that prevent or reduce loss of color in the dyed article.

The treatment composition comprises a dye and water. In an additional embodiment, the treatment composition consists essentially of dye and water. In this context, any compound that would be used to enhance penetration of the dye into the article such as a solvent would not be necessary and would be excluded from the composition.

Accordingly, the dye is water-soluble. Preferably, the dye is a liquid dye. Most preferably, the dye is an alkyleneoxy-substituted chromophore, as described in U.S. Patent Nos. 4,284,729; 4,460,690; 4,732,570; and 4,812,141.

Typically the dye is present in the treatment composition in an amount between 0.001 percent to less than or equal to 15 percent by weight, more typically 0.005 to less than or equal to 5 percent by weight, further typically 0.01 percent to less than or equal to 1 percent by weight, and still further typically 0.01 percent to less than 0.5 percent by weight. The dye may be present in the bath in an amount ranging between any combination of these upper and lower values, inclusive of the values thereof, the percent weights being based on the total weight of the treatment composition, in each case.

Water is typically present in the treatment composition in an amount of 85 wt.%, 95 wt.% and 99.999 wt.%, percent weights being based on the total weight of the treatment composition, in each case. The water used is preferably mineral-free water, typically obtained through a deionization process or distillation.

In a preferred embodiment of the present invention, the treatment composition contains: 0.001 to 0.5 percent by weight of said dye; and 99.5 to 99.999 percent by weight of water, based on the total weight of the treatment composition.

In an embodiment of the present invention, the treatment composition further includes a surfactant (or emulsifier). Suitable surfactants in the present invention are readily dispersible upon being poured into water, and often form a milky emulsion upon agitation thereof. Suitable surfactants include, for example, anionic surfactants, amphoteric surfactants, and non-ionic surfactants such as poly(C₂-C₄ alkoxylated) C₁₄-C₁₈ unsaturated fatty acids, poly(C₂-C₄ alkoxylated) phenols and poly(C₂-C₄ alkoxylated) C₁-C₉ alkyl substituted phenols. Combinations of surfactants can also be used.

Suitable anionic surfactants include, for example, amine salts or alkali salts of carboxylic, sulfamic or phosphoric acids such as sodium lauryl sulfate, ammonium lauryl sulfate, lignosulfonic acid salts, ethylene diamine tetra acetic acid (EDTA) sodium salts and acid salts of amines such as laurylamine hydrochloride or poly(oxy-1,2-ethanediyl),alpha.-sulfoomega-hydroxy ether with phenol 1-(methylphenyl)ethyl derivative ammonium salts.

Suitable amphoteric surfactants include, for example: lauryl sulfobetaine; dihydroxy ethylalkyl betaine; amido betaine based on coconut acids; disodium N-lauryl amino propionate; or the sodium salts of dicarboxylic acid coconut derivatives.

Examples of poly(C₂-C₄ alkoxylated) C₁₄-C₁₈ unsaturated fatty acids include ethoxylated, propoxylated and/or butoxylated tetradecenyl carboxylic acid. Examples of poly(C₂-C₄ alkoxylated) phenols include ethoxylated, propoxylated and/or butoxylated phenol. Examples of poly(C₂-C₄ alkoxylated) C₁-C₉ alkyl substituted phenols, include octylphenoxypolyethyleneoxyethanol and poly(oxy-1,2-ethanediyl), alpha-phenyl-omega-hydroxy, styrenated. Glycols, such as ethylene glycol, propylene glycol, diethylene glycol and triethylene glycol may be used as surfactants. Also suitable as a surfactant is benzyl alcohol.

The optional surfactant (emulsifier) may be used in an amount less than or equal to 15 percent by weight. Preferably, when present, the surfactant is present in the treatment composition in an amount of 0.5 to 15 percent by weight, and more preferably in an amount of 1 to 4 percent by weight, based on the weight of the treatment composition.

The treatment composition may further optionally include a performance enhancing additive selected from at least one of UV stabilizers, optical brighteners, mold release agents, antistatic agents, thermal stabilizers, IR absorbers and antimicrobial agents (substances or compounds). To the extent that any additive might fall within the definition of solvent above, it should be noted that no additives are required for coloration of the plastic article.

In an embodiment, the plastic article contains at least one of pigments, crosslinked polymethyl-methacrylate microspheres, glass microspheres and metal flakes.

Inclusion of one or more of these optional performance enhancing additives in the treatment composition serves to improve the physical performance / properties of the dyed plastic article. In addition to the dye, the optional additives also diffuse, impregnate or otherwise are imbibed into the bulk of the plastic article while it is immersed in the treatment composition. For example, including UV stabilizers in the treatment composition results in a dyed plastic article having improved UV resistance. Mold release agents would be more advantageously included in the treatment composition when the plastic article is selected from thermoplastic pellets and/or thermoplastic strands, from which a molded article would later be prepared, as will be discussed further herein. The optional performance enhancing additives may be selected from those that are known for use in preparing thermoplastic and thermoset molded plastic articles.

Classes of UV (ultraviolet) stabilizers (or absorbers) that may be used in the treatment composition of the present invention include, but are not limited to, salicylic acid UV absorbers, benzophenone UV absorbers, benzotriazole UV absorbers, cyanoacrylate UV absorbers, and mixtures thereof.

A further class of UV stabilizers that may be used in the method of the present invention include those modified with at least one poly(oxyalkylene) chain. Such poly(oxyalkylene) chain modified UV stabilizers are characterized in having low migratory properties once imbibed (or diffused) into the plastic article (e.g., they do not migrate from a colored plastic article into which they have been imbibed into a second, colorless plastic article causing the second article to be colored). The poly(oxyalkylene) chain may be a homopolymer, copolymer or block-copolymer formed from the reaction of C₂-C₂₀ alkyelene oxides (e.g., ethylene oxide, propylene oxide and butylene oxide). The poly(oxyalkylene) group may be terminated with a hydroxyl group, a C₁-C₂₀ alkyl ether group, or a C₁-C₂₀ ester group. Poly(oxyalkylene) chain modified UV stabilizers are described, for example, in further detail in United States Patent No. 6,602,447 B2.

Optical brighteners that may be included in the treatment composition in the method of the present invention typically absorb a light wavelength of 450 nm or less and emit the light at a higher wavelength, such as a wavelength of 550 nm or less, preferably 525 nm or less. It is preferred that the emitted light be in the blue region of the visible spectrum (e.g., emitted light having a wavelength of at least about 400 nm and up to about 525 nm. Most preferably, the light emitted is no more than about 500 nm.

Classes of optical brighteners that may be used in the present invention include, but are not limited to benzoxazole derivatives and stilbene derivatives. Examples of commercially available benzoxazole derivatives that may be used in the present invention include, but are not limited to: 2,2'-(2,5-thiophenediyl) bis [5-tert-butylbenzoxazole] (commercially available as Uvitex^{®} OB from Ciba); benzoxazole derivatives such as Blankophor^{®} KLA (from Bayer of Pittsburgh, Pa.); Hostalux^{®} KCB (from Clariant of Muttenz, Switzerland); and Hostalux^{®} KCU (from Clariant). An example of a commercially available stilbene derivative is 4,4'-bis(2-benzoxazolyl) stilbene (commercially available as Eastobrite^{®} OB-1 from Eastman of Kingsport, Tenn.). Further classes of optical brighteners that may be used in the present invention include, but are not limited to: derivatives of 4,4'-diminostilbene-2-2'-disulfonic acid; coumarin derivatives (e.g., 4-methyl-7-diethylaminocoumarin); and bis-(styryl) biphenyls.

Classes of mold release agents that may be included in the treatment composition include, but are not limited to fatty acid-based release agents, fatty acid amide-based mold release agents, alcohol-based mold release agents, fatty acid ester-based mold release agents, silicone-based mold release agents, and mixtures or combinations thereof. Fatty acid-based release agents that may be used include, for example, stearic acid and hydroxystearic acid. Fatty acid amide-based mold release agents that may be used include, for example, stearic acid amide, ethylenebisstearoamide and alkylenebisfatty acid amides. Antistatic agents that may be included in the treatment composition in the method of the present invention include, but are not limited to non-ionic antistatic agents, such as those containing fluorocarbon groups, and silicone oils, such as BAYSILONE O1 A (commercially available from Bayer AG, Germany). Further examples of antistatic agents that may be used in the present invention include, distearylhydroxylamine, triphenyl amine, tri-n-octylphosphine oxide, triphenyl phosphine oxide, pyridine N-oxide and ethoxylated sorbitan monolaurate.

Classes of thermal (or heat-resistant) stabilizers that may be included in the treatment composition of the method of the present invention include, but are not limited to, phenol stabilizers, organic thioether stabilizers, organic phosphide stabilizers, hindered amine stabilizers, epoxy stabilizers and mixtures thereof. Specific examples of thermal stabilizers include, but are not limited to, 2,6-di-t-butyl-p-cresol, o-t-butyl-p-cresol, tetrakis-(methylene-3-(3,5-di-t-butyl-4-hydroxyphenyl)propionate)methane, β-naphthylamine, p-phenylenediamine, and thiodiethylene bis(3,5-di-tert-butyl)-4-hydroxyhydrocinnamate, which is commercially available from Ciba Specialty Chemical under the tradename IRGANOX 1035 thermal stabilizer.

Infrared (IR) absorbers that may be used in the method of the invention include dyes that absorb in the IR region of the spectrum. Examples of commercially available IR absorbers include, CYASORB IR-99, IR-126 and IR-165, which are available from Glendale Protective Technologies, Inc., Lakeland, Fla.

Antimicrobial agents that may be included in the treatment composition in method of the present invention include, for example, substances having antimicrobial activity towards microorganisms, such as pathogenic microorganisms. The term "antimicrobial agents" as used herein and in the claims is also inclusive of antiseptic, disinfectant and antifungal substances. In addition, the antimicrobial agents may also be used in a pre-activated form, e.g., in a form that does not become antimicrobially active until the occurrence of a triggering event, such as action of a microbe on the pre-activated substance.

Examples of antimicrobial agents that may be included in the treatment composition include, but are not limited to: quinolones, such as nalidixic acid, pipemidic acid, cinoxacin, ciprofloxacin, norfloxacin, ofloxacin, pefloxacin and enoxacin; aminoglycosides, such as gentamycin, kanamycin, amikacin, sisomycin, tobramycin and netilmicin; macrolides, such as erythromycin, clarithromycin and azithromycin; polypeptides, such as bacitracin, mupirocin, thyrothricin, gramicidin and tyrocidin; lincomycins, such as lincomycin and clindamycin; and antimycobacterial agents, such as rifampicin and fusidic acid. Further examples of antimicrobial agents that may be used in the treatment composition include: 10,10'-oxybis-phenoxy arsine; 2-n-octyl-4-isothiazolin-3-one; 2,4,4'-trichloro-2'-hydroxy diphenyl ether (also named 5-chloro-2-(2,4-dichlorophenoxy)phenol, and commonly referred to as Triclosan); N-butyl-1,2-benzisothiazolin-3-one; and N-(trichloromethylthio)phthalamide.

The performance enhancing additives if used are typically present in the treatment composition in an amount totaling 15-0.001%, 5-0.2% and 2-0.05%, based on the total weight of the treatment composition.

Additional additives can be compounded into the plastic article, such as mold release agents, fillers, UV stabilizers, hydrolytic stabilizers and thermal stabilizers, reinforcing agents in the form of fibers or flakes (e.g., metal flakes such as aluminum flakes), flame retardant agents; pigments, and opacifying agents, such as titanium dioxide, light-diffusing agents, such as polytetrafluoroethylene, zinc oxide, Paraloid EXL-5136 available from Rohm and Haas and crosslinked polymethylmethacrylate microspheres (such as n-licrospheres from Nagase America).

The method of the present invention involves dyeing a plastic article. The plastic article may comprise at least one polymer selected from thermoplastic and/or thermoset polymers, as those terms are understood in the art. Suitable polymers include, for example, thermoplastic and thermoset polycarbonates, polyesters, polyester polycarbonate copolymers and blends, polyethylene glycol (PETG), polymethylmethacrylate (PMMA), polyurethanes, styrene-acrylonitrile (SAN), acrylonitrile-butadiene-styrene (ABS), nylon, polyvinylalcohols, and plasticized polyvinylchlorides. Mixtures of any of these polymers can also be used. Specifically excluded from the methods of the present invention are polymers prepared from diethyleneglycol bis allylcarbonate.

The plastic article may be a molded plastic article, which is prepared by art-recognized methods. Molding methods include, for example compression molding, injection molding, rotational molding, extrusion, injection and extrusion blow molding, and casting. The molded plastic article may be selected from shaped articles, films (e.g., having a thickness of less than 30 mils (762 µm)), and sheets (e.g., having a thickness of greater than or equal to 30 mils (762 µm)). Examples of shaped molded articles include, optical lenses, ophthalmic lenses, sunshade lenses, face shields and glazings (e.g., windows in transportation vehicles, such as cars, trucks and aircraft, and windows in residential and commercial buildings). Further examples of molded plastic articles include: computer face-plates; keyboards; bezels and cellular phones; color coded packaging and containers of all types; residential and commercial lighting fixtures and components therefore; sheets, e.g., used in building and in construction; tableware, including plates, cups and eating utensils; small appliances and their components; as well as decorative films, including films that are intended for use in film insert molding. The plastic article can also be any type of sport equipment or athletic shoes or athletic shoe parts, such as shoe soles, mid-soles, uppers, bladders and energy-absorbing pads.

In an embodiment of the present invention, the plastic article is selected from thermoplastic pellets and/or thermoplastic strands. Thermoplastic pellets and strands may be made by art-recognized methods, such as extrusion or melt-spinning. The thermoplastic pellets and/or strands are dyed, and then may be further processed. In an embodiment of the present invention, the dyed thermoplastic pellets and/or strands are melted (e.g., in an extruder) to form a molten dyed thermoplastic composition, and then the molten dyed thermoplastic composition is introduced (e.g., injected) into a mold. The contents of the mold are allowed to cool, the mold is opened, and a dyed shaped molded article is removed therefrom.

This method of further processing dyed thermoplastic pellets and/or strands is favorably differentiated from the direct incorporation methods described previously herein. With dyed thermoplastic pellets and/or strands, the dye is already present within the thermoplastic polymer (rather than being added to the polymer separately), which allows for more control and reliability with regard to producing molded articles having a desired and reproducible level of tinting.

The plastic article is contacted with the treatment composition by at least one of:
(I) dipping at least a portion of the surface of the plastic article into the treatment composition; and
(II) applying the treatment composition to at least a portion of the surface of the plastic article.

Thus, in one aspect of the present invention, the plastic article to be tinted (e.g., a lens), is immersed at least partially in the treatment composition. Immersion is for a period of time and at temperature at least sufficient to facilitate at least some impregnation (diffusion or imbibition), of the dye into the bulk of the plastic article thus effecting dyeing (or tinting) thereof. The time and temperature employed typically depends on the composition of the plastic article. Thermoset plastic articles are typically more resistant to heat (e.g., having a higher heat distortion temperature) than thermoplastic articles. As such, thermoset plastic articles can typically withstand immersion in treatment compositions at higher temperatures than thermoplastic articles, which permits faster coloration.

In additional aspects, the present invention includes applying the treatment composition to at least a portion of the surface of the plastic article, such as by methods including spray application, curtain application, flow coating, and spin application.

Contact times for any of the above methods of application are typically less than 20 minutes, preferably from less than 1 second to 5 minutes, more preferably from 30 seconds to 3 minutes, most preferably from 1 to 3 minutes. The contact time may range between any of these upper and lower values, inclusive of the recited values.

The temperature of the treatment composition during contacting of the plastic article is typically at least room temperature (e.g., 25°C) and less than the boiling and/or decomposition temperature of the treatment composition, and less than the deformation/heat deflection temperature of the treated polymer or article. Typically the treatment composition is maintained at a temperature of 25°C to 99°C, for example from 50°C to 75°C.

The tinted (or dyed) plastic article is then withdrawn from the treatment composition. Withdrawal of the dyed plastic article from the treatment composition may be performed quickly or at a slower rate (e.g., at a rate sufficient to effect a tinting gradient). When forming a dyed plastic article having a tinting gradient, the portion of the article that remains in the treatment composition for a longer period of time is impregnated with more dye, and thus exhibits a greater degree of tinting (relative to those portions which were removed from the bath at an earlier time).

The treatment composition may be prepared by mixing the dye, water and optional surfactants and performance enhancing additives together in any order. When using performance enhancing additives that are solids and only sparingly soluble in water, it is best to have them in the filter bag. Otherwise they are somewhat difficult to remove from the surface of the article during the cleaning operation. Also more of the additive is required because pieces of undissolved additive floats in the rinse solution and is lost when the rinse solution is changed.

In a further embodiment, when immersion methods are used for contacting the plastic article, the treatment composition is optionally agitated, such as by continuously introducing it into and withdrawing it from an immersion tank (or vessel). Typically, the immersion tank is part of a circuit which includes an inlet that is in fluid communication (via an inlet conduit) with a pump, which is in fluid communication with an outlet from the tank via an outlet conduit. The circuit may optionally include at least one filter, e.g., a bag filter as described previously herein, located inline with the inlet and/or outlet conduits. Preferably, the inlet and outlet of the immersion tank are positioned below the liquid level of the treatment composition within the tank.

The immersion tank inlet may include a tube around the inner circumference of the tank and having a plurality of perforations (e.g., a diffuser or diffuser ring). Continuously introducing the treatment composition into the immersion tank by passage through a ring having a plurality of perforations increases the level of turbulent mixing within the immersion tank, and improves the efficiency and uniformity of dyeing of plastic articles immersed therein. The perforations in the diffuser ring may have any suitable shape, e.g., circular, ellipsoid, polygonal or combinations thereof. The perforations of the diffuser ring typically have diameters of from 0.79 mm to 12.70 mm, e.g., from 3.17 mm to 6.35 mm. The diffuser ring may have any suitable configuration, e.g., it may be flat, concave or convex.

The scope of the method of the present invention is inclusive of additional steps whereby the composition of the treatment composition is modified, e.g., such that an initial dye or dyes or performance-enhancing compounds may be substituted with a subsequent dye or dyes or other performance enhancing compounds. In an embodiment of the present invention, the dye and optional performance enhancing additives are separated from the other components of the treatment composition (e.g., the water and optional surfactants). Such a separation is environmentally favorable in that it allows for re-use of the non-dye components of the bath, for example with another dye or dyes, or with a fresh dye(s), or as a rinse composition for rinsing dyed plastic articles removed from the treatment composition. In addition, the dye separation method may be performed if the dye of the treatment composition has been damaged, such as oxidized or otherwise denatured (e.g., due to over heating due to a temperature spike).

The dye separation process may be performed by contacting the treatment composition with particulate activated carbon, and then isolating a substantially dye-free liquid therefrom containing water and optional surfactants in substantially the same relative proportions as prior to the separation step. Some of the performance enhancing additives may also be removed by the activating carbon, depending on the additive used. The dye-free liquid may then be mixed with another dye(s) to form a different treatment composition. The treatment composition may be contacted with the activated carbon by passing the treatment composition continuously through a bed or column containing activated carbon.

The activated carbon typically retains substantially all of the dye of the treatment composition, and preferably less than a minimal amount of the liquid components of the treatment composition (e.g., water and optional surfactants).

The dye-free liquid that is isolated in the dye separation process is substantially free of dye, e.g., containing an undetectable amount of dye as determined by means of spectrophotometric analysis. The particulate activated carbon typically has a 200 mesh particle size (e.g., a particle size of 0.075 mm). An example of a commercially available particulate activated carbon that may be used in the present invention is Filtrasorb 200 activated carbon from Calgon Carbon Corporation.

The amount of activated carbon that is required to effect dye separation is dependent in part on the temperature of the treatment composition. In general, the amount of activated carbon required to effect dye separation is: reduced as the temperature of the treatment composition is reduce; and increased as the temperature of the treatment composition is increased. In an embodiment of the present invention, the treatment composition is contacted with the activated carbon at a temperature of 25°C.

The dye(s) added to the dye-free liquid are those as described above, water-soluble and preferably liquid.

The dye separation process may further include the step of adding additional materials to the further treatment composition such as surfactants and/or performance enhancing additives, which may each be selected from those classes and examples as described previously herein.

Upon removal from the treatment composition, the dyed plastic article is typically rinsed to remove excess treatment composition material there from. The rinsing step is typically achieved by contacting at least a portion of the surface of the dyed article with a rinse composition comprising water. The water of the rinse composition may be deionized or distilled water, and may be heated or ambient temperature. If heated, the water is typically maintained at a temperature of 75°C.

The rinse composition may be contacted with the surface of the dyed plastic article by means of, for example, immersion (dipping), spray application and/or curtain application. After contact with the surface of the dyed plastic article, the rinse composition may be recycled and used to rinse additional dyed articles. After a number of rinse cycles, dye will typically accumulate in the recycled rinse composition. Accumulated dye may be removed from the recycled rinse composition by contacting the recycled rinse composition with particulate activated carbon, as described previously herein with regard to the dye separation process. Upon separating accumulated dye from the recycled rinse composition, the dye-free recycled rinse composition may then be used to rinse additional dyed articles.

The rinse composition typically contains only water. After rinsing, the dyed plastic article is usually dried. Drying may be accomplished by wiping the rinsed dyed plastic article with a soft, dry cloth, and/or by standing at room temperature (25°C). Alternatively, the rinsed dyed plastic article may be dried by exposure to elevated temperatures (above 25°C), e.g., at a temperature of from 50°C to 100°C. In addition, warm air (e.g., having a temperature of 50°C to 100°C) may be passed over the surfaces of the rinsed dyed plastic article.

The present invention is more particularly described in the following examples, which are intended to be illustrative only, since numerous modifications and variations therein will be apparent to those skilled in the art. Unless otherwise specified, all parts and percentages are by weight.

### EXAMPLES

In the following examples, each dye bath was prepared by adding 26,989 g deionized water to a 8-L stainless steel mixing tank. The water was passed continuously at the temperature indicated in Table 1 through a bag filter into which 25 grams of the solid Macrolex dye had been previously placed. The heated water, containing the dye, was cycled from the mixing tank through the bag filter and back to the mixing tank for a period of time sufficient to saturate the water with dye, and thus forming the dye bath. The dye bath was recycled back to the mixing tank at a rate sufficient to enhance turbulent mixing of the dye bath during dyeing operations.

For those experiments in Table 1 requiring the use of the Reactint® liquid dyes in place of the solid Macrolex dyes, the water-soluble, liquid dye was added directly to the circulating solution at a concentration of 2 grams of dye/1-L of solution.

The initial cycling, for purposes of forming a saturated dye bath, was performed for a period of approximately 10 minutes after the dye bath temperature reached the set condition. The dye bath was then continuously cycled through the above described system at the temperature indicated in Table 1 and at a rate of approximately 3 liters/minute.

In the following examples, the amount of Macrolex dye in the dye bath is estimated to be a positive amount that is greater than zero and less than or equal to 0.1 percent by weight, based on the total weight of the water in the dye bath. Typically, a small amount of Macrolex dye was observed to be present within the bag filter at the completion of each experiment.

In the experiments requiring liquid Reactint® dye, it was assumed that the dye totally dissolves in the water, and is present in solution at a concentration of 2g/L of solution.

After the color operation was complete, the dye bath was cooled to ambient temperature, and then the precipitated dye was separated from the liquid phase by filtration through a 20 micro bag filter. The mother liquor from the filtration process was pumped through activated carbon to remove the soluble dye from the deionized water. After this carbon treatment, the colorless water could be either recycled to formulate another color, or alternatively, discarded.

Data from the testing is provided in Table 1 below. The following materials were used:
Texin 270 -- polyester resin, shore hardness 70D.
Texin 970U -- polyether resin, shore hardness 70D.
Texin DP7-1199 - polyester resin, shore hardness 70A.
Desmopan DP 9370A - polyether resin, shore hardness 70A.
Makrolon® 2308 - polycarbonate resin

**Table 1**

| | **Macrolex Ceres Blue** | **Macrolex Red G** | **Milliken Reactint Blue** | **Macrolex Ceres Blue** | **Macrolex Red G** |
|---|---|---|---|---|---|
| **Material** | **@ 97C 1 minute** | **@ 97C 1 minute** | **@ 97C 1 minute** | **@ 75C 1 minute** | **@ 75C 1 minute** |
| | **water only** | **water only** | **water only** | **water only** | **water only** |
| **Soft Materials** | | | | | |
| Texin DP 7-1199 | medium blue | red | very dark blue | dark blue | very light red |
| Desmopan 9370A | medium blue | red | dark blue | very light blue | |
| | | | | | |
| **Hard Materials** | | | | | |
| | | | | | |
| Texin 270 | medium blue | red | medium blue | very light blue | |
| Texin 970U | light blue | medium red | light blue with swirls | medium blue with swirls | light red |
| | | | | | |
| Makrolon 2608 | | light pink | | | |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A method of tinting a plastic article comprising:
(a) providing a plastic article comprising a thermoset or thermoplastic polymer, with the proviso that the plastic article does not comprise a polymer prepared from diethyleneglycol bis allylcarbonate,
(b) contacting at least a portion of the surface of said plastic article with a treatment composition comprising at least one dye and water,
(c) maintaining said portion of said plastic article in contact with said treatment composition for a period of time at least sufficient to form a tinted plastic article;
(d) removing said tinted plastic article from contact with said treatment composition; and
(e) rinsing said tinted plastic article with water to remove excess dye,
wherein the treatment composition is **characterized by** the absence of an organic solvent.

2. The method of Claim 1, wherein the dye is an alkyleneoxy-substituted chromophore.

3. The method of Claim 1 wherein said treatment composition is maintained at a temperature of 25 to 99°C

4. The method of Claim 1 wherein said period of time is from less than 0.1sec to 5 minutes.

5. The method of Claim 4, wherein said period of time is from 30 sec to 3 minutes.

6. The method of Claim 1 wherein said plastic article is contacted with said treatment composition by at least one of:
(I) dipping at least a portion of the surface of said plastic article into said treatment composition; and
(II) applying said treatment composition to at least a portion of the surface of said plastic article.

7. The method of Claim 6 wherein said treatment composition is applied to at least a portion of the surface of said plastic article by at least one of spray application, curtain application, flow coating and spin application.

8. The method of Claim 1, wherein said thermoplastic or thermoset polymer comprises a polymer selected from the group consisting of polycarbonates, polyesters, polyester polycarbonate copolymers and blends, polyethylene glycol (PETG), polymethylmethacrylate (PMMA), polyurethanes, polyurethanes, styrene-acrylonitrile (SAN), acrylonitrile-butadiene-styrene (ABS), nylon, polyvinylalcohols, plasticized polyvinylchlorides and mixtures thereof.

9. The method of Claim 1 wherein said treatment composition further comprises one or more surfactants.

10. The method of Claim 1 wherein the surfactant is selected from the group consisting of glycols.

11. The method of Claim 1 wherein said plastic article further comprises at least one of pigments, crosslinked polymethylmethacrylate microspheres, glass microspheres and metal flakes.

12. The method of Claim 1 wherein said plastic article is a molded article selected from the group consisting of shaped articles, films and sheets.

13. The method of Claim 12 wherein said molded article is a shaped article selected from the group consisting of optical lenses, ophthalmic lenses, sunshade lenses, face shields, glazings and athletic shoe parts.

14. The method of Claim 1 wherein said plastic article is selected from the group consisting of thermoplastic pellets and thermoplastic strands and further comprising melting at least one of said treated thermoplastic pellets and said treated thermoplastic strands to form a treated molten thermoplastic composition, and
introducing said treated molten thermoplastic composition into a mold, thereby forming a treated shaped molded article.

15. The method of Claim 1 further comprising:
(i) contacting said treatment composition with particulate activated carbon to form a mixture of said treatment composition and particulate activated carbon;
(ii) isolating from said mixture a substantially dye free and/or additive-free liquid comprising water;
(iii) optionally adding at least one dye to said substantially additive-free water thereby forming a further treatment composition.
